(19) Europäisches Patentamt

European Patent Office

Office européen des brevets

(11) **EP 1 261 897 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(21) Anmeldenummer: **01909554.6**

(22) Anmeldetag: **02.02.2001**

(51) Int Cl.⁷: **G05B 23/02**

(86) Internationale Anmeldenummer:
**PCT/DE2001/000416**

(87) Internationale Veröffentlichungsnummer:
**WO 2001/063371 (30.08.2001 Gazette 2001/35)**

(54) **VERFAHREN ZUM BETRIEB UND VORRICHTUNG ZUR ÜBERWACHUNG EINER TECHNISCHEN ANLAGE**

METHOD FOR OPERATING AND DEVICE FOR MONITORING A TECHNICAL INSTALLATION

PROCEDE POUR FAIRE FONCTIONNER UNE INSTALLATION TECHNIQUE, ET DISPOSITIF POUR SURVEILLER CETTE INSTALLATION

(84) Benannte Vertragsstaaten:
**AT BE CH CY DE DK ES FI FR GB GR IE IT LI LU MC NL PT SE TR**

(30) Priorität: **25.02.2000 DE 10008812**

(43) Veröffentlichungstag der Anmeldung:
**04.12.2002 Patentblatt 2002/49**

(73) Patentinhaber: **SIEMENS AKTIENGESELLSCHAFT**
**80333 München (DE)**

(72) Erfinder: **MERKLEIN, Thomas**
**91056 Erlangen (DE)**

(56) Entgegenhaltungen:
**EP-A- 0 482 523          US-A- 5 914 875**

**Beschreibung**

Die Erfindung betrifft ein Verfahren zum Betrieb einer technischen Anlage, wobei die technische Anlage mehrere Systeme zur Lösung unterschiedlicher Aufgaben der Betriebsführung besitzt. Die Erfindung betrifft ferner eine Vorrichtung zur Überwachung einer derartigen technischen Anlage.

In modernen komplexen technischen Anlagen kommt zur Steuerung der Produktion ein Leitsystem zum Einsatz, das die Zustände aller Anlagenteile zu jedem Zeitpunkt des Betriebs erfasst und für das Bedienpersonal alle für den Betrieb der technischen Anlage notwendigen Informationen verfügbar macht. Darüber hinaus können Schutzsysteme eingesetzt werden, die in gefährlichen Situationen - unabhängig von anderen Systemen - die jeweils betroffenen Teilanlagen oder Komponenten schnell und sicher abschalten, um Schaden von Material und Personal abzuwenden. Außerdem kann auch ein System zur Betriebserhaltung zum Einsatz kommen, in dem alle Daten verwaltet werden, die für eine vorausschauende Planung des Betriebs der technischen Anlage nötig sind, wie z.B. Wartungspläne, Ersatzteilhaltung, Bestellabwicklung usw. Auch die betriebswirtschaftlichen Aspekte einer technischen Anlage können in einem separaten System bearbeitet werden. Dort können beispielsweise die detaillierten Produktionskosten kalkuliert werden, die sich u.a. aus den Randbedingungen Rohstoff-, Personal-, Transport- und Maschinenlaufzeitkosten ergeben und es können z.B. auch Kalkulationen zur Kostenoptimierung durchgeführt werden. Die genannten Systeme der technischen Anlage sind beispielhaft zu verstehen, es können auch eine Reihe von weiteren Systemen oder auch weniger Einzelsysteme zum Einsatz kommen.

Eine derartige Aufteilung der Aufgaben einer technischen Anlage auf mehrere spezialisierte Systeme ist üblich. Dabei besteht jedoch die Schwierigkeit, die grundlegende Ursache eines von einem der System gemeldeten Ereignisses aufzuspüren, da die Informationen über den Betriebszustand der technischen Anlage auf mehrere Systeme verteilt sind und man im Allgemeinen zwischen mehreren Systemen wechseln muss um z.B. die Meldung einer Störung bis zu ihren grundlegenden auslösenden Ursachen zurückzuverfolgen.

In der Druckschrift EP 0 482 523 A2 ist ein Fehlerdiagnosesystem offenbart, bei welchem in separaten Darstellungsbereichen eine Hierarchie der Betriebsabläufe und eine Hierarchie der Anlagenkomponenten einander gegenübergestellt sind, wobei mögliche Fehlerquellen identifiziert werden.

Aus dem Patent US 5,914,875 ist ebenfalls ein Fehlerdiagnosesystem bekannt, wobei insbesondere Masse- und/oder Energieflüsse dahingehend untersucht werden, ob Zielvorgaben erreicht werden können.

Der Erfindung liegt die Aufgabe zugrunde, ein Verfahren zum Betrieb einer technischen Anlage mit mehreren Systemen zur Lösung unterschiedlicher Aufgaben der Betriebsführung anzugeben, mit dessen Hilfe die auf die verschiedenen Systeme verteilten Informationen kontextabhängig zusammengeführt werden können.

Erfindungsgemäß besteht das Verfahren der eingangs genannten Art aus folgenden Schritten:

1. Die für die technische Anlage relevanten Aufgaben werden vorab definiert.

2. Zur Verarbeitung verschiedener, von den Systemen zur Erfüllung ihrer Aufgaben zu erfassender Werte von Informationen werden vorab Informationsvariablen definiert.

3. Den Informationsvariablen werden vorab mehrere Hierarchien von abgeleiteten Informationsvariablen zugeordnet, wobei eine Informationsvariable einer höheren Stufe aus mindestens einer Informationsvariable der nächst niedrigeren Stufe gebildet und der Zusammenhang zwischen den Informationsvariablen der verschiedenen Hierarchiestufen dokumentiert wird.

4. Den Informationsvariablen und den abgeleiteten Informationsvariablen werden die Orte und deren Repräsentationen in den Systemen zugeordnet, an denen ihre während des späteren Betriebs zu verarbeitenden Werte entstehen.

5. Für jede Informationsvariable und abgeleitete Informationsvariable wird ein signifikanter Wertebereich festgelegt.

6. Während des Betriebs stellen die Systeme die zur Lösung ihrer Aufgaben verwendeten aktuellen oder archivierten Werte der Informationsvariablen und abgeleiteten Informationsvariablen zur Verfügung.

7. Wenn ein zur Verfügung gestellter Wert der Informationsvariable oder abgeleiteten Informationsvariable in den signifikanten Wertebereich fällt, wird die Informationsvariable oder abgeleitete Informationsvariable gekennzeichnet.

8. Die von gekennzeichneten Informationsvariablen oder abgeleiteten Informationsvariablen abhängigen Aufgaben werden gekennzeichnet.

9. Der ursächlich für das Auftreten eines in einen signifikanten Wertebereich fallenden Wertes einer Informationsvariable oder abgeleiteten Informationsvariable verantwortliche mindestens eine Wert einer Informationsvariable der niedrigsten Hierarchiestufe und dessen Entstehungsort oder dessen Entstehungsorte werden durch schrittweise hierarchisch absteigende Rückverfolgung von der mindestens einen gekennzeichneten Aufgabe über die gekennzeichneten abgeleiteten Informationsvariablen bis hin zur mindestens einen gekennzeichneten Informationsvariable der niedrigsten Hierarchiestufe gezielt identifiziert.

Während des Betriebs der technischen Anlage entstehen an den verschiedenen Orten Informationen, die je nach zu lösender Aufgabe von dem jeweiligen spezialisierten System erfasst und verarbeitet werden. Weist z.B. während des Betriebs ein Anlagenteil oder eine Komponente einen kritischen Zustand auf, so wird diese Information in dem zugehörigen spezialisierten System erfasst. Aus dieser Meldung und ggf. weiteren Informationen werden im Allgemeinen in mehreren Schritten übergeordnete Meldungen, sogenannte Sammelmeldungen gebildet und an andere Systeme übergeben. So wird z.B. von einem Wartungssystem an das Leitsystem eine Sammelmeldung der Nichtverfügbarkeit einer Teilanlage übergeben, jedoch kann aus Sicht des Leitsystems aus dieser übergebenen Information normalerweise nicht im Detail entnommen werden, welche Komponente der betreffenden Teilanlage zur Nichtverfügbarkeit der Teilanlage führte. Beispielsweise konnten laufende Wartungsarbeiten an einer Komponente einer Teilanlage zu deren Nichtverfügbarkeit führen; die genannten Wartungsarbeiten werden in einem System zur Betriebserhaltung verwaltet, das an das Leitsystem lediglich die Sammelmeldung über die Nichtverfügbarkeit der betreffenden Teilanlage übergibt. Das Bedienpersonal der technischen Anlage müsste dann beim Auftreten der o.g. Sammelmeldung im Leitsystem zum System zur Betriebserhaltung wechseln, um die eigentliche Ursache der Nichtverfügbarkeit - nämlich die laufenden Wartungsarbeiten an einer speziellen Komponente - zu erkunden; dabei ist unter Umständen auch ein Wechsel zwischen mehreren Systemen nötig. Der Zusammenhang zwischen den in den verschiedenen Systemen erzeugten Informationen ist darüber hinaus oft auch nicht eindeutig ohne Umwege rückverfolgbar; ein gewisses Maß an Intuition von Seiten des Bedienpersonals ist daher oft unerlässlich. Das Verfahren der erfindungsgemäßen Art erlaubt es, die Ursache eines gemeldeten Ereignisses gezielt aufzuspüren ohne dabei zwischen den Systemen wechseln zu müssen. Das Verfahren kann beispielsweise in einem separaten System implementiert werden. Wendet man das Verfahren auf die archivierten Informationen der Systeme an, so ist eine in die Vergangenheit gerichtete Fehleranalyse bis hin zur ursächlich auslösenden Ursache möglich. Aus derartigen Erkenntnissen vergangener Fehlerzusammenhänge kann für den gegenwärtigen und zukünftigen Betrieb der technischen Anlage gewinnbringend Gebrauch gemacht werden.

In vorteilhafter Ausgestaltung der Erfindung werden die Orte, an denen die während des Betriebs zu verarbeitenden Werte entstehen, mit Zusatzinformationen verknüpft, die bei der Rückverfolgung von der mindestens einen gekennzeichneten Aufgabe über die gekennzeichneten abgeleiteten Informationsvariablen hin zu der mindestens einen gekennzeichneten Informationsvariable der niedrigsten Hierarchiestufe gezielt abgerufen werden können.

Bei diesen Zusatzinformationen kann es sich beispielsweise um Handbücher, Betriebsanleitungen, Werkstattpläne, Schaltbücher, Ausdrucke von Computerprogrammen usw. handeln. Besonders bei Störungen können derartige verfügbare Zusatzinformationen dazu beitragen, die Ursache der Störung schneller zu beseitigen.

Die Erfindung führt daher zu einer Vorrichtung zur Überwachung einer technischen Anlage. In dieser Vorrichtung ist jedes System in einer entsprechenden Rechenstufe implementiert, und die Überwachung geschieht durch einen entsprechenden Datenaustausch zwischen den Systemen untereinander und einer Überwachungsstufe mit einer Anzeige der identifizierten Informationsvariablen und Entstehungsorte. Die Funktion der Überwachungsstufe und die Anzeige kann bereits in einer der Rechenstufen integriert sein; in diesem Falle kann auf eine eigene Überwachungsstufe verzichtet werden.

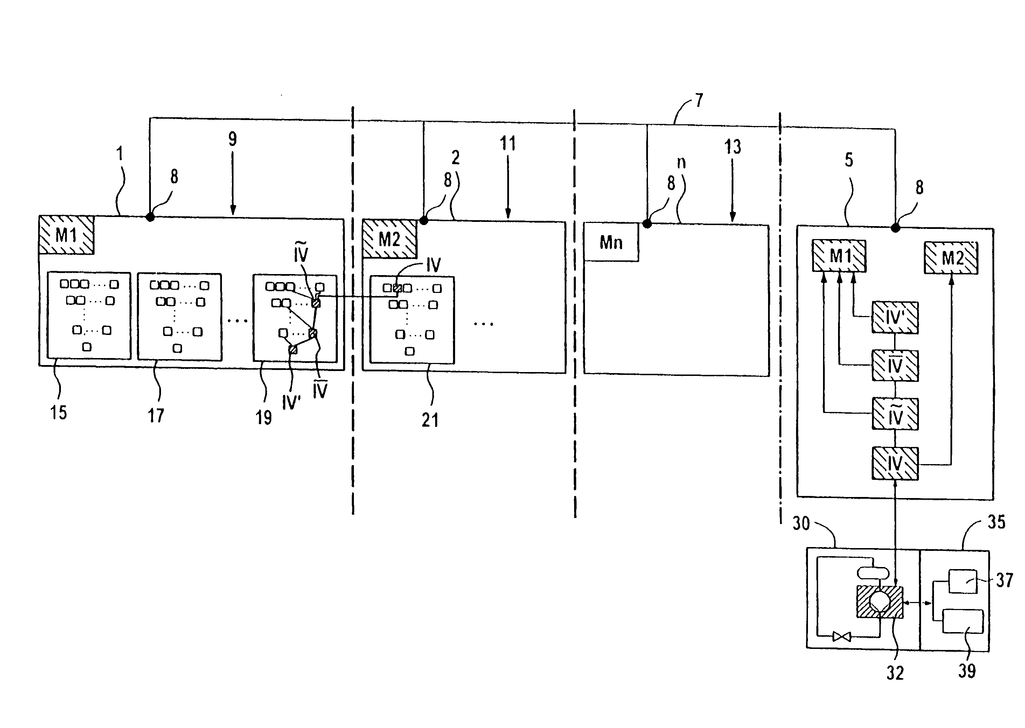

Die Zeichnung veranschaulicht ein Ausführungsbeispiel der Erfindung. In diesem Beispiel sind mehrere Systeme zur Lösung der verschiedenen Aufgaben der Betriebsführung einer technischen Anlage dargestellt, die jeweils in einem eigenen Rechner installiert sind, sowie ein weiteres System in einem getrennten Rechner zur Durchführung des erfindungsgemäßen Verfahrens. Die Aufteilung der Systeme und ihre Implementierung in Hardware kann aber auch auf andere Weise erfolgen.

Ein System 1 enthält mehrere Hierarchien 15, 17 und 19 von Informationsvariablen, bei welchen während des Betriebs der technischen Anlage die Informationsvariablen der niedrigsten Hierarchiestufe mit aktuellen Werten 9 belegt werden. Daraus werden abgeleitete Informationswerte einer höheren Hierarchiestufe - sogenannte Sammelmeldungen - gebildet. Diese können auch unter Einbeziehung von Informationswerten oder abgeleiteten Informationswerten anderer Systeme gebildet werden. Eine Markierung M1 wird dann gesetzt, wenn innerhalb des Systems 1 mindestens ein Wert einer Informationsvariable oder abgeleiteten Informationsvariable in einen festgelegten signifikanten Wertebereich fällt. Die Markierung M1 zeigt also an, das innerhalb des Systems 1 mindestens ein aufmerksamkeitsbedürftiger Zustand eines Anlagenteils oder einer Komponente vorliegt.

Ein System 2 dient ebenfalls zur Lösung einer anderen speziellen Aufgabe der Betriebsführung der technischen Anlage. Es wird ebenso wie das System 1 mit aktuellen Werten 11, die für die Lösung dieser Aufgabe notwendig sind, der technischen Anlage versorgt. Die Bildung von mehreren Hierarchien 21 von Informationsvariablen geschieht dabei in entsprechender Weise wie bei System 1. Eine Markierung M2 wird für das System 2 gesetzt, wenn mindestens ein Wert einer Informationsvariable oder abgeleiteten Informationsvariable in den signifikanten Wertebereich fällt, also mindestens ein aufmerksamkeitsbedürftiger Zustand einer Teilanlage des Systems 2 oder einer Komponente vorliegt.

Bei dem System n handelt es sich ebenfalls um ein weiteres System zur Lösung einer speziellen Aufgabe der Betriebsführung der technischen Anlage. Es wird entsprechend wie die anderen Systeme mit aktuellen Werten 13 aus der technischen Anlage versorgt. Ebenso wie bei den anderen Systemen sind in dem System n mehrere Hierarchien von Informationsvariablen gebildet. Die Markierung Mn zeigt für das System n an, ob mindestens ein aktueller Wert einer Informationsvariable oder abgeleiteten Informationsvariable in den signifikanten Wertebereich fällt, also ob mindestens ein aufmerksamkeitsbedürftiger Zustand einer Teilanlage des Systems n oder einer Komponente vorliegt.

Ein weiteres System 5 dient zur Durchführung des erfindungsgemäßen Verfahrens. Die Verbindung 7 beschreibt eine bidirektionale Kommunikationsverbindung zwischen den Anschlüssen 8 der Systeme 1 bis n und des weiteren Systems 5. Die Systeme 1 bis n übergeben an das weitere System 5 Verweise auf die in ihnen gekennzeichneten Informationsvariablen IV oder abgeleiteten Informationsvariablen $I\tilde{V}$, $I\bar{V}$ und $IV'$ sowie den Status ihrer jeweiligen Markierung M1 bis Mn. Eine derartige Verknüpfung von Informationen mittels Verweisen ist bekannt und wird als indirekte Adressierung bezeichnet. Dabei werden in diesem Beispiel Informationen von einem ersten System zu einem zweiten System nicht in Form von Kopien übergeben, sondern vielmehr reicht es aus, dass das erste System dem zweiten System mitteilt, an welcher Stelle im ersten System sich die Informationen befinden. So vermeidet man, dass der Informationsbestand doppelt oder sogar mehrfach geführt wird.

In Kenntnis darüber, an welchen Stellen die Systeme 1 bis n ihre gekennzeichneten Informationsvariablen oder abgeleiteten Informationsvariablen mit den aktuellen Werten abgelegt haben, und in Kenntnis der Zustände der Markierungen M1 bis Mn kann das System 5 unter Zuhilfenahme der dokumentierten Zusammenhänge zwischen den Informationsvariablen und abgeleiteten Informationsvariablen eine gezielte Suche nach der ursprünglichen Ursache eines Ereignisses durchführen. Dabei wird der Bediener des Systems 5 schrittweise von mindestens einer der gesetzten Markierungen M1 oder M2 über die gekennzeichneten abgeleiteten Informationsvariablen $IV'$, $I\bar{V}$ und $I\tilde{V}$ hin zu den gekennzeichneten Informationsvariablen IV der niedrigsten Hierarchiestufe geführt. Der Wert der gekennzeichneten Informationsvariable IV der niedrigsten Hierarchiestufe bildet ursächlich den Wert der abgeleiteten gekennzeichneten Informationsvariable $I\tilde{V}$, deren Wert den Wert der abgeleiteten gekennzeichneten Informationsvariable $I\bar{V}$ verursacht, welche den Wert der abgeleiteten gekennzeichneten Informationsvariable $IV'$ bildet. Die Markierungen M1 und M2 der Systeme 1 bzw. 2 werden gesetzt, da in beiden Systemen mindestens eine gekennzeichnete Informationsvariable oder abgeleitete Informationsvariable vorliegt.

Besonders in komplexeren technischen Anlagen kann der Einsatz des erfindungsgemäßen Verfahrens zu einer wesentlich beschleunigten Suche nach der Ursache einer Störung führen. Somit können Gefährdungen schneller beseitigt sowie Stillstandzeiten verringert werden.

Der gekennzeichneten Informationsvariable IV ist ein Ort 30 zugeordnet, an dem sich die Ursache der Störung befindet; hier im Beispiel handelt es sich dabei um eine defekte Pumpe 32. Der Ort 30 ist mit Zusatzinformationen 35, bestehend aus Bedienungsanleitungen 37 und Schaltbüchern 39, verknüpft, deren Benutzung eine schnelle Störungsbehebung fördert.

## Patentansprüche

1. Verfahren zum Betrieb einer technischen Anlage mit mehreren Systemen (1, 2, ..., n) zur Lösung unterschiedlicher Aufgaben der Betriebsführung, mit folgenden Schritten:

   a) Die für die technische Anlage relevanten Aufgaben werden vorab definiert;
   b) zur Verarbeitung verschiedener, von den Systemen zur Erfüllung ihrer Aufgaben zu erfassender Werte von Informationen werden vorab Informationsvariablen definiert;
   c) den Informationsvariablen werden vorab mehrere Hierarchien (15, 17, 19, 21) von abgeleiteten Informationsvariablen zugeordnet, wobei eine Informationsvariable einer höheren Stufe aus mindestens einer Informationsvariable der nächstniedrigeren Stufe gebildet und der Zusammenhang zwischen den Informationsvariablen der verschiedenen Hierarchiestufen dokumentiert wird;
   d) den Informationsvariablen und den abgeleiteten Informationsvariablen werden die Orte (30) und deren Repräsentationen in den Systemen zugeordnet, an denen ihre während des späteren Betriebs zu verarbeitenden Werte entstehen;
   e) für jede Informationsvariable und abgeleitete Informationsvariable wird ein signifikanter Wertebereich festgelegt;
   f) während des Betriebs stellen die Systeme die zur Lösung ihrer Aufgaben verwendeten aktuellen oder archivierten Werte der Informationsvariablen und abgeleiteten Informationsvariablen zur Verfügung;
   g) wenn ein zur Verfügung gestellter Wert der Informationsvariable oder abgeleiteten Informationsvariable in den signifikanten Wertebereich fällt, wird die Informationsvariable oder abgeleitete Informationsvariable gekennzeichnet;
   h) die von gekennzeichneten Informationsvariablen (IV) oder abgeleiteten Informationsvariablen ($IV'$, $I\bar{V}$, $I\tilde{V}$) abhängigen Aufgaben wer-

den gekennzeichnet; und

i) der ursächlich für das Auftreten eines in einen signifikanten Wertebereich fallenden Wertes einer Informationsvariable oder abgeleiteten Informationsvariable verantwortliche mindestens eine Wert einer Informationsvariable der niedrigsten Hierarchiestufe und dessen Entstehungsort oder Entstehungscrte werden durch schrittweise hierarchisch absteigende Rückverfolgung von der mindestens einen gekennzeichneten Aufgabe über die gekennzeichneten abgeleiteten Informationsvariablen ($IV'$, $\bar{IV}$, $I\tilde{r}$) bis hin zur mindestens einen gekennzeichneten Informationsvariable (IV) der niedrigsten Hierarchiestufe gezielt identifiziert.

2. Verfahren nach Anspruch 1,
wobei die Orte (30) mit Zusatzinformationen (35) verknüpft werden, die bei der Rückverfolgung von der mindestens einen gekennzeichneten Aufgabe über die gekennzeichneten abgeleiteten Informationsvariablen ($IV'$, $\bar{IV}$, $I\tilde{r}$) hin zu der mindestens einen gekennzeichneten Informationsvariable (IV) der niedrigsten Hierarchiestufe gezielt abgerufen werden können.

3. Vorrichtung zur Überwachung einer technischen Anlage mit mehreren Systemen zur Lösung unterschiedlicher Aufgaben der Betriebsführung, wobei

a) jedem System eine Rechenstufe (1, 2, ..., n) zur Lösung einer definierten Aufgabe zugeordnet ist;
b) in jeder Rechenstufe Informationsvariablen zur Verarbeitung der zur Erfüllung der Aufgabe zu erfassenden Werte definiert sind;
c) in den Rechenstufen den Informationsvariablen mehrere Hierarchien (15, 17, 19, 21) von abgeleiteten Informationsvariablen zugeordnet sind, wobei eine Informationsvariable einer höheren Stufe aus mindestens einer Informationsvariable der nächstniedrigeren Stufe gebildet und der Zusammenhang zwischen den Informationsvariablen der verschiedenen Hierarchiestufen dokumentiert sind;
d) den in den Rechenstufen enthaltenen Informationsvariablen und abgeleiteten Informationsvariablen Orte (30), an denen während des Betriebs der technischen Anlage die zu verarbeitenden Werte entstehen, und deren Repräsentation in den Rechenstufen zugeordnet sind;
e) in den Rechenstufe für jede Informationsvariable und abgeleitete Informationsvariable ein signifikanter Wertebereich festgelegt ist;
f) in den Rechenstufen während des Betriebs die zur Lösung ihrer Aufgaben verwendeten aktuellen oder archivierten Werte der Informationsvariablen oder abgeleiteten Informationsvariablen erfassbar sind;
g) die Rechenstufen ertüchtigt sind, diejenigen Informationsvariablen oder abgeleiteten Informationsvariablen zu kennzeichnen, deren erfasster aktueller oder archivierter Wert in den signifikanten Wertebereich fällt;
h) in jeder Rechenstufe eine ihr jeweils zugehörige Markierung aktivierbar ist, falls diese Rechenstufe gekennzeichnete Informationsvariablen (IV) oder abgeleitete Informationsvariablen ($IV'$, $\bar{IV}$, $I\tilde{r}$) enthält; und
i) in einer Überwachungsstufe (5) der mindestens eine ursächlich für das Auftreten eines in einen signifikanten Wertebereich fallenden Wertes einer Informationsvariable oder abgeleiteten Informationsvariable verantwortliche Wert einer Informationsvariable der niedrigsten Hierarchiestufe und dessen Entstehungsort oder Entstehungsorte gezielt identifizierbar sind, indem die Überwachungsstufe schrittweise hierarchisch absteigend die mindestens eine gesetzte Markierung über die gekennzeichneten abgeleiteten Informationsvariablen ($IV'$, $\bar{IV}$, $I\tilde{r}$) bis hin zur mindestens einen gekennzeichneten Informationsvariable (IV) der niedrigsten Hierarchiestufe zurückverfolgt.

## Claims

1. Method for operating a technical installation having a number of systems (1, 2,..., n) for performing different system management tasks, with the following steps:

a) the tasks relevant for the technical installation are predefined;
b) for processing different values of information to be registered by the systems to perform their tasks, information variables are predefined;
c) the information variables are assigned in advance a number of hierarchies (15, 17, 19, 21) of derived information variables, an information variable of a higher level being formed from at least one information variable of the next-lower level and the relationship between the information variables of the various hierarchical levels being documented;
d) the information variables and the derived information variables are assigned the locations (30) at which their values to be processed during later operation arose and the representations of said locations in the systems;
e) a significant range of values is fixed for each information variable and derived information variable;
f) during operation, the systems make available the current or archived values of the information variables and derived information variables used for performing their tasks;

g) if a value of the information variable or derived information variable made available falls within the significant range of values, the information variable or derived information variable is marked;

h) the tasks dependent on marked information variables (IV) or derived information variables ($IV'$, $I\bar{V}$, $I\tilde{F}$) are marked; and

i) the at least one value of an information variable of the lowest hierarchical level that is causally responsible for the occurrence of a value of an information variable or derived information variable falling within a significant range of values, and the location or locations where said causal value arose, are specifically identified by tracing back in a hierarchically descending step-by-step progression from the at least one marked task via the marked derived information variables ($IV'$, $I\bar{V}$, $I\tilde{F}$) to the at least one marked information variable (IV) of the lowest hierarchical level.

2. Method according to Claim 1, the locations (30) being linked with additional information (35) which during the tracing-back from the at least one marked task via the marked derived information variables ($IV'$, $I\bar{V}$, $I\tilde{F}$) to the at least one marked information variable (IV) of the lowest hierarchical level can be specifically called up.

3. Device for monitoring a technical installation having a number of systems for performing different system management tasks, in which

a) each system is assigned a computing stage (1, 2,..., n) for performing a defined task;

b) in each computing stage, information variables for processing the values to be registered for performing the task are defined;

c) in the computing stages, the information variables are assigned a number of hierarchies (15, 17, 19, 21) of derived information variables, an information variable of a higher level being formed from at least one information variable of the next-lower level and the relationship between the information variables of the various hierarchical levels is documented;

d) the information variables and derived information variables contained in the computing stages are assigned locations (30) at which the values to be processed arose during the operation of the technical installation, and the representation of said locations in the computing stages;

e) a significant range of values is fixed in the computing stages for each information variable and derived information variable;

f) in the computing stages it is possible to register during operation the current or archived values of the information variables or derived information variables used for performing their tasks;

g) the computing stages have been provided with the capability of marking those information variables or derived information variables whose registered current or archived value falls within the significant range of values;

h) in each computing stage a marking respectively associated with it can be activated if this computing stage contains marked information variables (IV) or derived information variables ($IV'$, $I\bar{V}$, $I\tilde{F}$); and

i) in a monitoring stage (5), the at least one value of an information variable of the lowest hierarchical level that is causally responsible for the occurrence of a value of an information variable or derived information variable falling within a significant range of values, and the location or locations where said causal value arose, are specifically identifiable by the monitoring stage tracing back in a hierarchically descending step-by-step progression the at least one set marking via the marked derived information variables (IV', IV, IV) to the at least one marked information variable (IV) of the lowest hierarchical level.

**Revendications**

1. Procédé d'exploitation d'une installation technique comportant plusieurs systèmes (1, 2, ..., n) pour la réalisation de différentes tâches de la gestion d'exploitation, avec les étapes suivantes :

a) on définit préalablement les tâches déterminantes pour l'installation technique ;

b) on définit préalablement des variables d'information pour le traitement de différentes valeurs d'informations à acquérir par le système pour réaliser ses tâches ;

c) on associe préalablement aux variables d'information plusieurs hiérarchies (15, 17, 19, 21) de variables d'information déduites, une variable d'information d'un niveau supérieur étant formée à partir d'au moins une variable d'information du niveau juste inférieur et la relation entre les variables d'information des différents niveaux hiérarchiques étant documentée ;

d) on associe aux variables d'information et aux variables d'information déduites les lieux (30) où se forment leurs valeurs à traiter pendant la suite de l'exploitation ainsi que les représentations de ces lieux dans les systèmes ;

e) pour chaque variable d'information et variable d'information déduite, on spécifie un domaine de valeurs significatif ;

f) pendant l'exploitation, les systèmes fournissent les valeurs, actuelles ou archivées utilisées pour la réalisation de leurs tâches, des variables d'information et des variables d'information déduites ;

g) lorsqu'une valeur fournie de la variable d'information ou de la variable d'information déduite tombe dans le domaine de valeurs significatif, on caractérise la variable d'information ou la variable d'information déduite ;

h) on caractérise les tâches qui dépendent des variables d'information

caractérisées (IV) ou des variables d'information déduites caractérisées (IV', $\overline{IV}$, $\overset{\sim}{IV}$) ; et

i) on identifie de manière ciblée la ou les valeurs, initialement responsables de l'apparition d'une valeur tombant dans le domaine de valeurs significatif d'une variable d'information ou d'une variable d'information déduite, d'une variable d'information du niveau hiérarchique le plus bas ainsi que son lieu ou leurs lieux de formation, et ce grâce à un suivi progressif hiérarchiquement décroissant de la ou des tâches caractérisées, via les variables d'information déduites caractérisées (IV', $\overline{IV}$, $\overset{\sim}{IV}$), à la ou aux variables d'information caractérisées (IV) du niveau hiérarchique le plus bas.

2. Procédé selon la revendication 1, dans lequel les lieux (30) sont combinés à des informations supplémentaires (35) qui peuvent être exploitées de façon contrôlée lorsqu'on remonte de la ou des tâches caractérisées via les variables d'information déduites caractérisées (IV', $\overline{IV}$, $\overset{\sim}{IV}$) à la ou aux variables d'information caractérisées (IV) du niveau hiérarchique le plus bas.

3. Dispositif de surveillance d'une installation technique comportant plusieurs systèmes pour la réalisation de différentes tâches de la gestion d'exploitation, dans lequel

a) il est associé à chaque système un étage de calcul (1, 2, ..., n) pour la réalisation d'une tâche définie ;

b) dans chaque étage de calcul, des variables d'information sont définies pour le traitement des valeurs à acquérir pour réaliser la tâche ;

c) dans les étages de calcul, il est associé aux variables d'information plusieurs hiérarchies (15, 17, 19, 21) de variables d'information déduites, une variable d'information d'un niveau supérieur étant formée à partir d'au moins une variable d'information du niveau juste inférieur et la relation entre les variables d'information des différents niveaux hiérarchiques étant documentée ;

d) il est associé aux variables d'information et aux variables d'information déduites contenues dans les étages de calcul des lieux (30), où se forment leurs valeurs à traiter pendant l'exploitation de l'installation technique, ainsi que leur représentation dans les étages de calcul ;

e) dans l'étage de calcul, un domaine de valeurs significatif est spécifié pour chaque variable d'information et variable d'information déduite ;

f) dans les étages de calcul, il peut être acquis pendant l'exploitation les valeurs, actuelles ou archivées utilisées pour la réalisation de leurs tâches, des variables d'information et des variables d'information déduites ;

g) les étages de calcul sont capables de caractériser les variables d'information ou les variables d'information déduites dont la valeur actuelle ou archivée acquise tombe dans le domaine de valeurs significatif ;

h) dans chaque étage de calcul, un marquage associé respectivement à celui-ci peut être activé si cet étage de calcul contient des variables d'information caractérisées (IV) ou des variables d'information déduites caractérisées (IV', $\overline{IV}$, $\overset{\sim}{IV}$) ; et

i) dans un étage de surveillance (5), la ou les valeurs, initialement responsables de l'apparition d'une valeur tombant dans le domaine de valeurs significatif d'une variable d'information ou d'une variable d'information déduite, d'une variable d'information du niveau hiérarchique le plus bas ainsi que son lieu ou leurs lieux de formation sont identifiables de manière ciblée par le fait que l'étage de surveillance met en oeuvre un suivi progressif hiérarchiquement décroissant de la ou des marques apposées, via les variables d'information déduites caractérisées (IV', $\overline{IV}$, $\overset{\sim}{IV}$), à la ou aux variables d'information caractérisées (IV) du niveau hiérarchique le plus bas.